# EUROPÄISCHE PATENTSCHRIFT

(11) **EP 2 622 870 B1**
(45) Veröffentlichungstag und Bekanntmachung des Hinweises auf die Patenterteilung: **17.01.2018**
(21) Anmeldenummer: 11754328.0
(22) Anmeldetag: 19.08.2011
(51) Int. Cl.: H04Q 9/00, G01R 31/36

(54) **VERFAHREN UND ANORDNUNG ZUR ÜBERWACHUNG MINDESTENS EINER BATTERIE, BATTERIE MIT EINER SOLCHEN ANORDNUNG SOWIE EIN KRAFTFAHRZEUG MIT EINER ENTSPRECHENDEN BATTERIE**
METHOD AND ARRANGEMENT FOR MONITORING AT LEAST ONE BATTERY, BATTERY HAVING SUCH AN ARRANGEMENT, AND MOTOR VEHICLE HAVING A CORRESPONDING BATTERY
PROCÉDÉ ET ENSEMBLE POUR SURVEILLER AU MOINS UNE BATTERIE, BATTERIE ÉQUIPÉE D'UN TEL ENSEMBLE ET VÉHICULE AUTOMOBILE ÉQUIPÉ D'UNE BATTERIE CORRESPONDANTE

(30) Priorität: 28.09.2010 DE 102010041492
(43) Veröffentlichungstag der Anmeldung: 07.08.2013
(73) Patentinhaber: Robert Bosch GmbH, 70442 Stuttgart (DE); SAMSUNG SDI CO., LTD., Yongin-si, Gyeonggi-do 446-577 (KR)
(72) Erfinder: WEBER, Jochen, 71706 Markgroeningen (DE); TZIVANOPOULOS, Chrysanthos, 70806 Kornwestheim (DE); HASENKOPF, Dirk, 70190 Stuttgart (DE); BUTZMANN, Stefan, 71717 Beilstein (DE); HEYL, Andreas, 71640 Ludwigsburg (DE); SCHINDLER, Frank, 72762 Reutlingen (DE)
(74) Vertreter: Bee, Joachim
(86) Internationale Anmeldenummer: PCT/EP2011/064266
(87) Internationale Veröffentlichungsnummer: WO 2012/048929

(56) Entgegenhaltungen:
- EP-A1- 0 918 363
- WO-A1-2010/003366
- DE-A1-102005 034 118
- US-A1- 2007 046 261
- MARTIN KRAMMER ET AL: "Improving methods and processes for the development of safety-critical automotive embedded systems", EMERGING TECHNOLOGIES AND FACTORY AUTOMATION (ETFA), 2010 IEEE CONFERENCE ON, IEEE, PISCATAWAY, NJ, USA, 13. September 2010 (2010-09-13), Seiten 1-4, XP031805276, ISBN: 978-1-4244-6848-5

## Beschreibung

Die vorliegende Erfindung betrifft ein Verfahren und eine Anordnung zur Überwachung mindestens einer Batterie, eine Batterie mit einer solchen Anordnung sowie ein Kraftfahrzeug mit einer entsprechenden Batterie, welche insbesondere einsetzbar sind zur sicheren Überwachung des Batteriezustandes bei reduziertem Hardwareaufwand.

### Stand der Technik

Die von Batteriesteuergeräten umzusetzenden Sicherheitsfunktionen sind oft einfachere Prüfungen auf Schwellwertüberschreitungen sicherheitsrelevanter Parameter wie Spannung, Strom und/oder Temperatur. Solche Funktionen können leicht in Hardware (zum Beispiel Komparatoren) umgesetzt werden. Daher besteht das übliche Sicherheitskonzept für Batteriesteuergeräte meist aus zwei redundanten Pfaden - einer Überwachung über Hardware und einer über Software. Über diese diversitäre Redundanz kann ein ausreichendes Maß an Sicherheit erreicht werden.

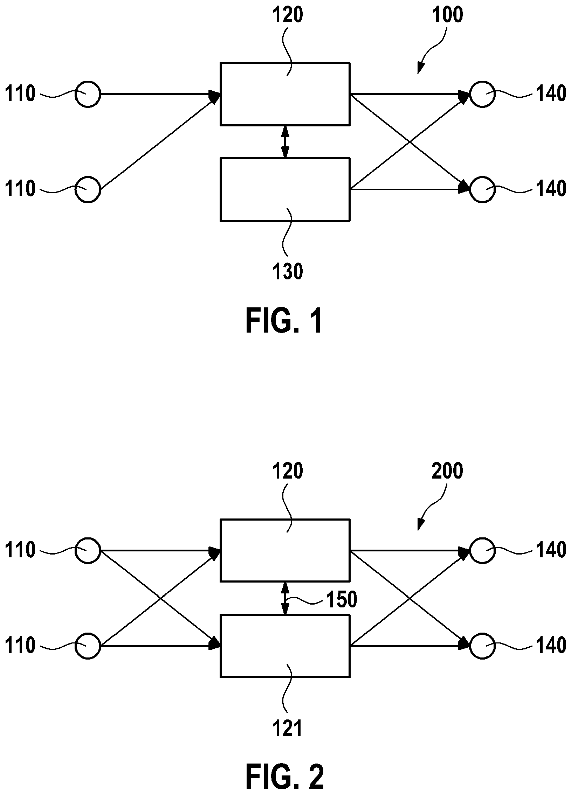

Im Gegensatz zu Batteriesteuergeräten ist bekannt, bei Motorsteuergeräten zur Überwachung von sicherheitsbezogenen Funktionen auf einem Mikrocontroller ein sogenanntes 3-Ebenen-Konzept vorzusehen. Hier ist die Ebene 1 die Funktionsebene, die Ebene 2 die Funktionsüberwachungsebene und die Ebene 3 die Rechnerüberwachungsebene. Mit diesem Konzept ist eine Sicherheitsintegrität von bis zu ASIL-B (ASIL = Automotive Safety Integrity Level) zu erreichen. Das 3-Ebenen-Konzept entspricht einem 1oo1D-System (vergleiche Figur 1). In einem solchen System 100 werden Messgrößen durch Sensoren 110 erfasst, die durch einen Funktionsrechner 120 überwacht werden.

Die Zuverlässigkeit des Funktionsrechners 120 wird durch eine Diagnoseeinheit 130 überwacht. In Abhängigkeit der Messgrößen werden Aktoren 140 angesteuert.

Allgemein ist ein MooN-System eine Auswertelogik, welche N Messwerte vergleicht, von denen mindestens M vorgegebene Kriterien erfüllen müssen (M out of N).

Ein MooND-System ist ein MooN-System mit Selbstprüfung.

Neben Moo1 D-Systemen existieren auch 1 oo2D-Systeme 200, bei denen zum Beispiel zusätzlich eine gegenseitige Überwachung 150 zweier Funktionsrechner 120, 121 erfolgt (vergleiche Figur 2).

Neue Sicherheitsnormen (wie zum Beispiel ISO 26262) stellen hohe Anforderungen an Steuergeräte, auf denen sicherheitsbezogene Funktionen ausgeführt werden. Die Klassifizierung erfolgt über den "ASIL", in den Stufen ASIL-A bis ASIL-D, wobei ASIL-D die höchsten Anforderungen stellt. Eine hohe Einstufung hat hohe prozessuale Aufwende zur Folge. Zudem werden strengere Anforderungen an den Nachweis der Normkonformität gestellt.

Das herkömmliche Sicherheitskonzept für Batteriesteuergeräte mit einem Hardware- und einem Softwarepfad für die redundante Überwachung der sicherheitsbezogenen Größen hat folgende Nachteile:

### Kosten für den Hardwarepfad:

Da Hochvolt-Batterie-Systeme für Automotive-Anwendungen meist aus einer großen Anzahl von Zellen bestehen (zum Beispiel werden 400 V durch einhundert in Reihe geschaltete 4-V-Zellen erzielt), ist die Realisierung des Hardwarepfads kostenaufwendig. Denn die sicherheitsbezogenen Parameter müssen für jede Zelle (oder jedes Modul aus zum Beispiel sechs Zellen) einzeln überwacht werden. Das heißt für jede Zelle (jedes Modul) müssen die entsprechenden Hardwareelemente (zum Beispiel Komparatoren) verbaut werden.

### Eingeschränkte Komplexität der Überwachungsfunktionen:

Durch Hardwareelemente lassen sich meist nur einfache Überwachungsfunktionen (zum Beispiel Schwellwertüberwachungen) realisieren. Komplexere Funktionen, zum Beispiel die Verarbeitung mehrerer und/oder dynamischer Signale, sind nur mit hohem Aufwand realisierbar.

Aus der Veröffentlichung DE 11 2004 001 276 T5 ist ein Batteriesatz-Lade-/ Entlade-Steuergerät bekannt, bei dem ein scheinbarer Ladezustandswert durch einen Kontroller berechnet wird. Eine Reduzierung des Hardwareaufwandes bei der Umsetzung der erforderlichen Sicherheitsfunktionen ist bei dieser Lösung jedoch nicht vorgesehen.
einzufügen nach dem zweiten Absatz auf Seite 3 der Anmeldung:
Ein Gerät zur Überwachung von Hochspannungsausgängen einer Batterie wird in der Veröffentlichung WO 2010/003366 A1 beschrieben. Dabei werden Schaltzustände von Hochspannungsschaltern der Batterie überwacht, um Fehlfunktionen zu vermeiden.

Aus der Offenlegungsschrift DE 10 2005 034 118 A1 ist eine Überwachungseinheit für eine elektronische Steuerungseinheit für ein Fahrzeug bekannt. Gemäß dieser Lösung sind die elektronischen Steuerungseinheiten mit einer Einheit ausgestattet, welche Übermittlungssignale ausgibt, die eine Energieversorgungsleitung überlagern. Durch Auswertung des Vorhandenseins dieser Übermittlungssignale kann festgestellt werden, ob eine elektronische Steuerungseinheit korrekt arbeitet.

Ein Verfahren zum Überwachen von Brennstoffzellen eines Brennstoffzellenstapels ist aus der Veröffentlichung EP 0 918 363 A1 bekannt. Bei diesem Verfahren wird die gemittelte Spannung einer ersten Gruppe von Brennstoffzellen des Brennstoffzellenstapels ermittelt und mit der gemittelte Spannung einer zweiten Gruppe von Brennstoffzellen des Brennstoffzellenstapels verglichen, um einen Ausfall der ersten Gruppe zu erkennen.

Ein Verfahren zur Überwachung einer Batterie, bei dem Temperatur, Leitfähigkeit und/oder Impedanz der Batterie durch Anwendungen, die auf einem Batterieüberwachungssystem implementiert sind, überwacht werden, ist aus der Veröffentlichung US 2007/0046261 A1 bekannt. Es wird vorgeschlagen, die Signale drahtlos an das Batterieüberwachungssystem zu übertragen, um Verdahtungsaufwand zu verringern.

In der Veröffentlichung Krammer, Martin et al.: Improving Methods and Processes for the Development of Safety-Critical Automotive Embedded Systems, Emerging Technologies and Factory Automation (ETFA), 2010 IEEE Conference on, IEEE, Piscataway, NJ, USA, 13. September 2010, Seiten 1-4 wird ein Ansatz zur Erstellung einer Anforderungsanalyse (requirement engineering) für die Erstellung von sicherheitsrelevanter Software in Fahrzeugen vorgestellt.

### Offenbarung der Erfindung

Erfindungsgemäß wird ein Verfahren zur Überwachung mindestens einer Batterie vorschlagen, bei dem auf die herkömmlicherweise genutzte Hardware zur redundanten Überwachung von sicherheitsbezogenen Größen verzichtet, das heißt, auf den sogenannten Hardwarepfad, wird. Bei dem erfindungsgemäßen Verfahren werden Messgrößen, wie beispielsweise Spannung, Temperatur oder dergleichen, der mindestens einen Batterie durch mindestens eine Datenverarbeitungseinrichtung ausgewertet. Bei der Batterie kann es sich um eine Batterie handeln, welche eine Vielzahl von elektrochemischen Zellen umfasst, die in Reihe geschaltet sind. Es kann dabei vorgesehen sein, dass für die Auswertung sicherheitsbezogener Messgrößen eine Anzahl von einzelnen Zellen, zum Beispiel sechs Zellen, wiederum zu einem Modul zusammengefasst werden. Bei der Datenverarbeitungseinrichtung kann es sich um einen Mikrocontroller, einen programmierbaren Chip, einen programmierbaren Prozessor, eine programmierbare Logik, oder dergleichen handeln; allgemein gesprochen um eine programmierbare Datenverarbeitungseinrichtung, auf der die Sicherheitsfunktionen durch Software (Computerprogramme) umgesetzt werden. Um die Betriebssicherheit der Batterie auch bei fehlendem Hardwarepfad sicher zu gewährleisten, ist erfindungsgemäß weiter vorgesehen, dass die Kommunikationsverbindung zwischen der mindestens einen Batterie und der mindestens einen Datenverarbeitungseinrichtung überwacht wird. Eine bevorzugte Ausführungsform der Erfindung sieht dabei vor, dass die Signale über eine einkanalige Kommunikationsverbindung von der mindestens einen Batterie, den Modulen beziehungsweise. den Zellen der Batterie an die mindestens eine Datenverarbeitungseinrichtung übermittelt werden. In einer bevorzugten Ausführungsform der Erfindung ist vorgesehen, dass die Messgrößen der Zellen von mindestens einem in der einkanaligen Kommunikationsverbindung angeordneten Messbaustein, wie beispielsweise einem Analog-Digital-Wandler oder einem Sensor, eingelesen, digitalisiert und an die mindestens eine Datenverarbeitungseinrichtung weitergeleitet werden.

Vorzugsweise umfasst die Überwachung zumindest die Prüfung von Kommunikationsverbindungen und/oder von Komponenten innerhalb der Kommunikationsverbindung(en), wie beispielsweise von Sensoren zur Erfassung der Messgrößen, von Messbausteinen oder dergleichen und/oder der mindestens einen Datenverarbeitungseinrichtung, oder die Prüfung der Richtigkeit oder Plausibilität der über die Kommunikationsverbindung(en) ausgetauschten Signale.

Als vorteilhaft erweist es sich, wenn die Kommunikationsverbindung zwischen der Batterie, den Modulen beziehungsweise den Zellen der Batterie und der mindestens einen Datenverarbeitungseinrichtung auf Fehlerfreiheit überwacht wird. Diese Überwachung kann sich auch auf einzelne Teilstrecken der Kommunikationsverbindung beziehen. So können beispielsweise Teilstrecken der Kommunikationsverbindung unabhängig voneinander überwacht werden. Vorzugsweise erfasst die Überwachung jedoch alle Teilstrecken der Kommunikationsverbindung. Als eine Teilstrecke kann zum Beispiel die Verbindung zwischen der Batterie, den Modulen beziehungsweise den Zellen der Batterie und einem Messbaustein überwacht werden. Durch die Überwachung können insbesondere Kurzschlüsse, Verbindungen zu Spannungen, offene Leitungen oder dergleichen erfasst werden. In einer bevorzugten Ausführungsform der Erfindung ist vorgesehen, dass zumindest ein der Teil der Überwachung durch in der Kommunikationsverbindung angeordnete Elemente, wie zum Beispiel Messbausteine, und/oder durch die mindestens eine Datenverarbeitungseinrichtung ausgeführt wird.

In einer bevorzugten Ausführungsform ist weiter vorgesehen, dass zumindest ein Teil, vorzugsweise aber alle, der zwischen der Batterie, den Modulen beziehungsweise den Zellen der Batterie und der mindestens einen Datenverarbeitungseinrichtung ausgetauschten Signale auf Fehler hin überwacht werden. Insbesondere kann vorgesehen sein, die Plausibilität der Signale zu prüfen. Die Überwachung erfolgt vorzugsweise redundant. In einer bevorzugten Ausführungsform der Erfindung ist vorgesehen, zumindest die Fehlerfreiheit beziehungsweise die Plausibilität der Spannungs-, Temperatur- und/oder Strommesswerte zu prüfen. Als vorteilhaft erweist es sich, wenn beispielsweise zur Überwachung der Spannungsmesswerte neben den Spannungsmesswerten der einzelnen Zellen auch die Spannungsmesswerte von Modulen von aufeinanderfolgenden Zellen ausgewertet werden. Durch Vergleich der Spannungsmesswerte der einzelnen Zellen eines Moduls mit dem Spannungsmesswert des gesamten Moduls wird dann auf die Plausibilität der Spannungsmesswerte geschlossen.

Eine andere bevorzugte Ausführungsform sieht vor, zur Erfassung der Temperaturmesswerte mindestens zwei Temperatursensoren zur Plausibilisierung je physikalisch separierbarer Einheit zu nutzen. Bei thermisch stark gekoppelten Einheiten können diese zwei Temperatursensoren sogar für das gesamte thermisch gekoppelte System ausreichen. In solchen Fällen müssen nicht zwei Temperatursensoren für jede physikalisch separierbare Einheit, z.B. für jede Batteriezelle, vorgesehen werden.

Auch zur Überwachung der Strommesswerte werden in einer bevorzugten Ausführungsform mindestens zwei vorzugsweise diversitär ausgeführte Stromsensoren eingesetzt.

Für die Überwachung der Kommunikationsverbindung zwischen in der Kommunikationsverbindung angeordneten Komponenten und der mindestens einen Datenverarbeitungseinrichtung ist in einer bevorzugten Ausführungsform vorgesehen, dass diese Kommunikationsverbindung durch zumindest ein Prüfsignal überwacht wird. Vorzugsweise wird ein definiertes Prüfsignal von den in der Kommunikationsverbindung angeordneten Komponenten ausgegeben und von der mindestens einen Datenverarbeitungseinrichtung ausgewertet. Als vorteilhaft erweist es sich, ein dynamisches Prüfsignal zu verwenden.

Über das Prüfsignal können auch Komponenten, z.B. ein Analog-Digital-Wandler, überprüft werden. Die Überprüfung erfolgt bevorzugt über ein dynamisches Testsignal mit zwei Spannungspegeln (V_{High}, V_{Low}).

Als vorteilhaft erweist es sich auch, wenn die Überwachung redundant durch diversitäre Maßnahmen umgesetzt wird. Hierbei können zur Überwachung von Signalen oder des Betriebszustandes von Komponenten, wie zum Beispiel der Batterie, von Modulen beziehungsweise Zellen der Batterie, der mindestens einen Datenverarbeitungseinrichtung, von weiteren Komponenten wie zum Beispiel Messbausteinen innerhalb der Kommunikationsverbindung oder dergleichen, verschiedene Verfahren und/oder Algorithmen vorgesehen werden. Als besonders vorteilhaft erweist es sich, dass bei diesem Vorgehen spezielle Sicherheitsanforderungen wie etwa bei einer ASIL-Dekomposition, erfüllt werden. Durch die diversitär ausgeführten Sicherheitsfunktionen können verschiedene Sicherheitsanforderungen ausgeführt werden. So können beispielsweise durch eine erste Sicherheitsfunktion Anforderungen von ASIL-A und durch eine diversitär ausgeführte Sicherheitsfunktion Anforderungen von ASIL-B umgesetzt werden. Darüber hinaus kann vorgesehen sein, dass zumindest ein Teil der Sicherheitsfunktionen durch ein 3-Ebenen-Sicherheitskonzept abgesichert werden. Es kann weiter vorgesehen sein, dass sich diversitäre Sicherheitsfunktionen gegenseitig überwachen, zum Beispiel durch eine Frage-Antwort-Kommunikation.

In einer bevorzugten Ausführungsform der Erfindung ist vorgesehen, dass die diversitären Maßnahmen auf einer Datenverarbeitungseinrichtung implementiert sind. Es kann sich jedoch als vorteilhaft erweisen, wenn zumindest zwei Datenverarbeitungseinrichtungen vorgesehen werden, auf denen jeweils die Sicherheitsfunktionen diversitär umgesetzt sind. Dabei können die zumindest zwei Datenverarbeitungseinrichtungen in Serie und/oder parallel verschaltet sein. In diesem Falle können sämtliche im letzten Absatz beschriebenen Überwachungsmaßnahmen durch die mindestens zwei Datenverarbeitungseinrichtungen vorgenommen werden, zum Beispiel ASIL-A auf einer ersten Datenverarbeitungseinrichtung und ASIL-B auf einer zweiten Datenverarbeitungseinrichtung, oder die Frage-Antwort-Kommunikation findet zwischen verschiedenen Datenverarbeitungseinrichtungen satt.

Durch den Einsatz von zumindest zwei Datenverarbeitungseinrichtungen wird der Aufwand für die Softwareprozesse (ISO 26262) und die Diagnosedeckungsmaßnahmen (ISO 262626-5, Annex D) im Vergleich zu der Ausführungsform, in der lediglich eine Datenverarbeitungseinrichtung genutzt wird, deutlich reduziert.

Eine Anordnung nach der Erfindung weist mindestens eine Datenverarbeitungseinrichtung, wie zum Beispiel einen Mikrocontroller, einen Chip und/oder Prozessor, auf und ist derart eingerichtet, dass ein Verfahren zur Überwachung mindestens einer Batterie ausführbar ist, wobei Messgrößen von zumindest einer der mindestens einen Batterie durch die mindestens eine Datenverarbeitungseinrichtung ausgewertet werden, und wobei mindestens eine Überwachung von über eine Kommunikationsverbindung zwischen der mindestens einen Batterie und der mindestens einen Datenverarbeitungseinrichtung ausgetauschten Signalen erfolgt.

Ein weiterer Aspekt der Erfindung betrifft eine Batterie mit einer Anordnung zur Überwachung der Batterie, wobei die Anordnung derart eingerichtet ist, dass ein Verfahren zur Überwachung der Batterie ausführbar ist, wobei Messgrößen von zumindest einer der mindestens einen Batterie durch mindestens eine Datenverarbeitungseinrichtungen ausgewertet werden, und wobei mindestens eine Überwachung von über eine Kommunikationsverbindung zwischen der mindestens einen Batterie und der mindestens einen Datenverarbeitungseinrichtung ausgetauschten Signalen erfolgt. Vorzugsweise handelt es sich bei der Batterie um eine Lithium-Ionen-Batterie oder die Batterie umfasst elektrochemische Zellen, die als Lithium-Ionen-Batteriezellen ausgebildet sind.

Ein anderer Aspekt der Erfindung betrifft ein Kraftfahrzeug mit einem elektrischen Antriebsmotor zum Antreiben des Kraftfahrzeugs und einer mit dem elektrischen Antriebsmotor verbundenen oder verbindbaren Batterie gemäß dem im voranstehenden Absatz beschriebenen Erfindungsaspekt. Die Batterie ist jedoch nicht auf einen solchen Einsatzzweck eingeschränkt, sondern kann auch in anderen elektrischen Systemen eingesetzt werden.

Ein Computerprogramm zur Überwachung mindestens einer Batterie ermöglicht es einer Datenverarbeitungseinrichtung, nachdem es in Speichermittel der Datenverarbeitungseinrichtung geladen worden ist, ein Verfahren zur Batterieüberwachung durchzuführen, wobei Messgrößen von zumindest einer der mindestens einen Batterie durch mindestens eine Datenverarbeitungseinrichtungen ausgewertet werden, und wobei mindestens eine Überwachung von über eine Kommunikationsverbindung zwischen der mindestens einen Batterie und der mindestens einen Datenverarbeitungseinrichtung ausgetauschten Signalen erfolgt.

In einer weiteren bevorzugten Ausführungsform der Erfindung ist vorgesehen, dass das erfindungsgemäße Computerprogramm modular aufgebaut ist, wobei einzelne Module auf verschiedenen Teilen der Datenverarbeitungseinrichtung installiert sind.

Vorteilhafte Ausführungsformen sehen zusätzlich Computerprogramme vor, durch welche weitere in der Beschreibung angegebene Verfahrensschritte oder Verfahrensabläufe ausgeführt werden können.

Um das erfindungsgemäße Verfahren zur Überwachung mindestens einer Batterie durchzuführen, ist vorgesehen, ein computerlesbares Speichermedium einzusetzen, auf dem ein Programm gespeichert ist, das es einer Datenverarbeitungseinrichtung ermöglicht, nachdem es in Speichermittel der Datenverarbeitungseinrichtung geladen worden ist, ein Verfahren zur Batterieüberwachung durchzuführen, wobei Messgrößen von zumindest einer der mindestens einen Batterie durch mindestens eine Datenverarbeitungseinrichtungen ausgewertet werden, und wobei mindestens eine Überwachung von über eine Kommunikationsverbindung zwischen der mindestens einen Batterie und der mindestens einen Datenverarbeitungseinrichtung ausgetauschten Signalen erfolgt.

Die erfindungsgemäße Sicherheitsarchitektur erreicht ein hohes Maß an Sicherheit ohne einen Hardwarepfad. Dies wird insbesondere erreicht
- durch umfassende Sicherheitsmechanismen zur Absicherung des Signalpfads,
- in einer bevorzugten Ausführungsform durch einen zweiten Mikrocontroller und/oder
- durch eine geeignete Signalführung der Zellparameter an die Sicherheitsfunktionen/Logiken.

Die Architektur weist dabei insbesondere folgende Vorteile auf:
- Einsparung von Hardwareelementen in der Sensorik und in der Logik,
- Erreichung der Sicherheitsintegrität gemäß ISO 26262 mit geringerem prozessualen Aufwand als für ein System mit nur einem Mikrocontroller,
- Realisierbarkeit komplexer Sicherheitsfunktionen mit einer hohen Sicherheitsintegrität,
- Realisierbarkeit von Sicherheitsfunktionen mit geringerer Einschränkung der Verfügbarkeit des Systems,
- Realisierbarkeit eines verteilten Konzepts.

Vorteilhafte Weiterbildungen der Erfindung sind in den Unteransprüchen angegeben und in der Beschreibung beschrieben.

### Zeichnungen

Ausführungsbeispiele der Erfindung werden anhand der Zeichnungen und der nachfolgenden Beschreibung näher erläutert. Es zeigen:
Figur 1 eine Veranschaulichung eines 1oo1 D-Systems eines 3-Ebenen-Sicherheitskonzepts,
Figur 2 eine Veranschaulichung eines 1oo2D-Systems eines 3-Ebenen-Sicherheitskonzepts, und
Figur 3 eine schematische Veranschaulichung einer beispielhaften softwareüberwachungsbasierten Batteriesteuergerätearchitektur.

### Ausführungsformen der Erfindung

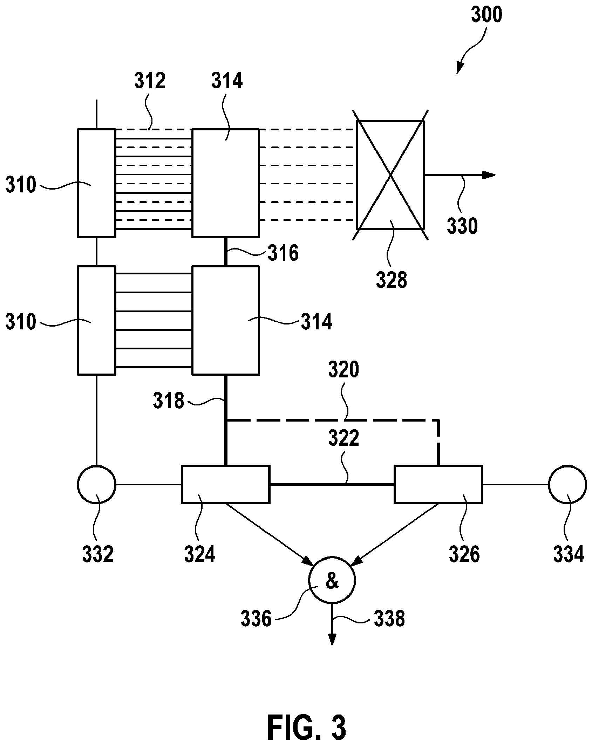

In der Figur 3 ist eine beispielhafte Architektur 300 einer softwareüberwachungsbasierten Batteriesteuergerätearchitektur wiedergegeben. Die Erfindung wird zwar anhand eines Ausführungsbeispiels beschrieben, bei dem zwei Mikrocontroller 324, 326 genutzt werden, es sind jedoch auch Ausführungsformen mit nur einem Mikrocontroller oder mit mehr als zwei Mikrocontrollern denkbar. Die Erfindung ist daher nicht auf Ausführungsformen mit zwei Mikrocontrollern 324, 326 eingeschränkt, sondern umfasst auch andere Ausführungen, solange die Ausführungsform nur die Merkmale der unabhängigen Ansprüche realisiert.

### Die Sicherheitskette der Batteriesteuergerätearchitektur 300

### Sensorik

Die Messgrößen 312 (wie zum Beispiel Spannung und/oder Temperatur) der Zellen werden von Messbausteinen 314 (zum Beispiel Analog-Digital-Wandlern) eingelesen, digitalisiert und nach Anfrage über Busse 316, 318, 320, 322 an die Logiken 324, 326 übermittelt. In einer beispielhaften Ausführungsform sind je sechs elektrochemischen Zellen der Batterie in einem Modul 310 zusammengefasst.

Wenn nun diese Signale über den einkanaligen Pfad ausreichend genau und sicher überwacht werden können (wie es weiter unten im Abschnitt "Absicherungsmaßnahmen für die Zellsignale" näher beschrieben wird), dann werden keine weiteren Messeinheiten für die Überwachung durch eine Hardwareschaltung 328 auf einem redundanten Abschaltpfad 330 (Hardwarepfad) benötigt - dies bringt Einsparungen bei den Hardwareaufwänden. Der Hardwarepfad 328, 330 ist bei der Erfindung nicht vorhanden.

### Logik

Die Messgrößen 312 werden in einem oder in zwei Mikrocontrollern 324, 326 ausgewertet, so dass der Hardwarepfad 328, 330 entfallen kann. Dies bringt - insbesondere bei der hohen Anzahl an zu überwachenden Signalen - Einsparungen in der Hardware, da hier für jedes einzelne Signal die Verbauung von Hardwareelementen notwendig wäre, wohingegen ein Mikrocontroller eine Vielzahl an Signalen verarbeitet werden kann.

Die Verwendung eines zweiten Mikrocontrollers 326 bietet den Vorteil, dass gemäß ISO 26262-9, clause 5 eine ASIL-Dekomposition durchgeführt werden kann. Dies führt dazu, dass die Anforderungen (ASIL) auf die beiden Pfade 318, 320 beziehungsweise Logiken 324, 326 aufgeteilt werden können und damit die Anforderungen an jedes einzelne Element, zum Beispiel die Prozessaufwände für die Realisierung der jeweiligen Software, reduziert werden - dies bringt Einsparungen bei den Softwareaufwänden.

Um hier einen ASIL-C zu erreichen, kann man die Pfade 318, 320 in ASIL-B und ASIL-A aufteilen. Der ASIL-B kann dann über einen Mikrocontroller 324 mit dem bekannten 3-Ebenen-Sicherheitskonzept, eventuell unter Wiederverwendung von bewährten Sofwaremodulen, realisiert werden. Für ASIL-A muss dann auf dem zweiten Mikrocontroller 326 nur noch eine reduzierte Menge an Anforderungen der ISO 26262 umgesetzt werden.

Für einen ASIL-D könnte auch der zweite Mikrocontroller 326 mit dem 3-Ebenen-Konzept gemäß ASIL-B abgesichert werden. Hierzu kämen dann aber eventuell weitere Anforderungen an den einkanaligen Anteil (Signalmessung) der Sicherheitskette.

Damit für die ASIL-Dekomposition die Unabhängigkeit der beiden Überwachungen gewährleistet ist, müssen die Sicherheitsfunktionen in den beiden Mikrocontrollern 324, 326 diversitär umgesetzt werden, zum Beispiel durch unterschiedliche Algorithmen oder unter Verwendung von Fest- und von Gleitkommazahlen.

Wenn beide Mikrocontroller 324, 326 ein Strommesssignal 332, 334 empfangen - über direkte Anbindung oder über einen Bus - können alle drei wichtigen Batterieparameter (Spannung, Temperatur, Strom) von beiden Mirkokontrollern 324, 326 überwacht werden.

Beide Mikrocontroller 324, 326 können sich über den verbindenden Bus 320, 322 auch gegenseitig zum Beispiel über eine Frage-Antwort-Kommunikation überwachen (ISO 26262-5, Table D.4: "reciprocal comparison by Software"; 1oo2 D-System).

Beide Mikrocontroller 324, 326 können in Serie geschaltet werden, zum Beispiel durch einen Bus 322 für die serielle Schaltung, so dass der erste Mikrocontroller 324, der sich zum Beispiel auf der Hochvoltseite befindet, die Sensorsignale abfragt und gleich zum zweiten Mikrocontroller 326 weiterleitet. Damit können weitere Hardwareelemente (Isolatoren) eingespart werden. Damit diese Einkanaligkeit ausreichend zuverlässig ist und nicht durch Einfachfehler zum Beispiel im ersten Mikrocontroller 324 beeinträchtigt werden kann, muss der Signalweg jedoch noch durch zusätzliche Diagnosemaßnahmen abgesichert werden (wie es weiter unten im Abschnitt "Signalwegabsicherung und Lebendigkeitsprüfung" beschrieben wird).

### Aktuatorik

Die Verwendung von zwei Mikrocontrollern 324, 326 bietet den Vorteil, dass auch die Ansteuerung der Aktuatorik im Fehlerfall durch zwei diversitäre Steuerungen 336 erfolgen kann (ISO 26262-5, Table D.2; "voter"). Die Aktuatorik selber muss ebenfalls redundant (mindestens zwei Hauptschütze durch einen redundanten Abschaltpfad 338) ausgeführt sein.

### Absicherungsmaßnahmen für die Zellsignale

### Zellverbindungen der Spannungsmessung

An der Verbindung der Zellen mit den Analog-Digital-Wandlern 314 können verschiedene Fehler anliegen. Kurzschlüsse und Verbindungen zu Spannungen können über out-of-range-Diagnosen entdeckt werden. Eine offene Leitung (open circuit) muss über weitere Diagnosemaßnahmen entdeckt werden. Manche Messbausteine/Analog-Digital-Wandler 314 bieten diese Art von Diagnosen an.

### Redundanz der Spannungsmessung

Durch die Redundanz können die Spannungssignale plausibilisiert werden (s. ISO "26262-5; Table D.11 "reference sensor"). In der vorgeschlagenen Architektur 300 wird diese Redundanz nicht über zweifach ausgeführte Messleitungen für die Zellen realisiert, sondern über zusätzliches Einlesen von "Modulspannungen", also der Spannung von sechs aufeinanderfolgenden Zellen eines Moduls 310. Über Summation der Zellspannungen und Vergleich mit der Modulspannung kann eine ausreichend genaue Plausibilisierung der Messwerte erfolgen.

### Redundanz der Temperaturmessung

Auch die Temperatursignale werden über Redundanz plausibilisiert (s. ISO 26262-5, Table D.11 "input comparsion"). Hierfür sind in der vorgeschlagenen Architektur 300 je zwei Temperatursensoren je physikalisch separierbarer Einheit vorgesehen. Über den Wärmetransport zwischen den Messpunkten erhält man redundante Werte.

### Signalwegabsicherung und Lebendigkeitsprüfung

Die Funktionsfähigkeit der Analog-Digital-Wandler 314 und auch die Busverbindung 316, 318, 320 von den Messeinheiten zu den Logiken werden durch Einlesen, Übertragung und Auswertung eines dynamischen Signals geprüft (s. ISO 26262-5, Table D.11 "Testpattern"). Hierzu wird je an einen Eingang der Analog-Digital-Wandler 314 eine alternierende Spannung (zum Beispiel Rechtecksignal) mit bekannter Dynamik und bekannten oberen und unteren Werten aufgegeben, über die Busse 316, 318, 320 übermittelt und in den Logiken 324, 326 ausgewertet. Die Logiken 324, 326 können Abweichungen feststellen und damit den Signalpfad als nicht zuverlässig bewerten beziehungsweise den sicheren Zustand anfordern.

In der vorgeschlagenen Architektur 300 wird dieses Signal jeweils von einem Oszillator erzeugt. Da die Werte der Testspannungen bekannt sind, wird über diesen Mechanismus auch der Bus 316, 318, 320 zwischen den Messeinheiten 314 und den Logiken 324, 326 überwacht (statt zum Beispiel einer üblichen CAN-Überwachung mit CRC-Checksumme).

### Redundanz der Strommessung

Jeder der Mikrocontroller 324, 326 erhält einen Strommesswert 332, 334 durch einen von zwei - bevorzugt diversitär aufgeführten - Stromsensoren. Der zweite Wert 334, 332 wird vom jeweils anderen Mikrocontroller über einen Bus 322 übermittelt, damit jede Logik 324, 326 den Stromwert plausibilisieren kann (s. ISO 26262-5, Table D.11 "input comparison").

Falls einer der Mikrocontroller 324, 326 auf der Hochvolt-Seite platziert wird, kann hier Hardwareaufwand gespart werden, da kein Isolator benötigt wird.

### Flexibilität durch Software

Durch die Verwendung einer programmierbaren Logik in dem einkanaligen Pfad (statt einer bisher üblichen, zusätzlichen Hardwareschaltung), kann man die Signale mit komplexeren Sicherheitsfunktionen überwachen. Zum Beispiel zeigte sich bei verschiedenen Zellen, dass für den Strom eine einfache obere Schwelle nicht ausreicht, sondern dass stattdessen zum Beispiel das Stromintegral überwacht werden muss. Durch Verwendung von Softwarepfaden kann die Sicherheit verbessert werden.

Komplexere Sicherheitsfunktionen können auf der anderen Seite ein unnötiges Zuschlagen der Überwachung verhindern. Falls zum Beispiel auf Grund von weiteren Einflussgrößen (zum Beispiel einer tiefen Temperatur) trotz des Reißens einiger Grenzschwellen die Sicherheit nicht gefährdet wäre, wäre eine weniger flexible Sicherheitsfunktion (zum Beispiel realisiert in Hardware) nicht in der Lage, diese Bedingung zur berücksichtigen. Durch Verwendung von Softwarepfaden kann die Verfügbarkeit verbessert werden.

Die Erfindung beschränkt sich in ihrer Ausführungsform nicht auf die vorstehend angegebenen bevorzugten Ausführungsbeispiele. Vielmehr ist eine Anzahl von Varianten denkbar, die von dem erfindungsgemäßen Verfahren, der erfindungsgemäßen Anordnung, der erfindungsgemäßen Batterie und dem erfindungsgemäßen Kraftfahrzeug auch bei grundsätzlich anders gearteten Ausführungen Gebrauch macht.

## Patentansprüche

1. Verfahren zur Überwachung mindestens einer Batterie, wobei Messgrößen (312) von zumindest einer der mindestens einen Batterie durch mindestens eine Datenverarbeitungseinrichtung (324, 326) ausgewertet werden, wobei mindestens eine Überwachung von über eine Kommunikationsverbindung (316, 318, 320) zwischen der mindestens einen Batterie und der mindestens einen Datenverarbeitungseinrichtung (324, 326) ausgetauschten Signalen erfolgt, **dadurch gekennzeichnet, dass**
eine redundante Überwachung von zumindest einem Teil der Messgrößen erfolgt und durch die redundante Überwachung zumindest Sicherheitsanforderungen gemäß ASIL-A und ASIL-B realisiert werden.

2. Verfahren nach Anspruch 1, wobei zumindest ein Teil der Messgrößen (312) durch diversitäre Verfahren ausgewertet wird.

3. Verfahren nach Anspruch 2, wobei die diversitären Verfahren auf einer Datenverarbeitungseinrichtung implementiert sind.

4. Verfahren nach einem der Ansprüche 2 oder 3, wobei sich die mindestens zwei diversitären Verfahren gegenseitig überwachen.

5. Verfahren nach einem der voranstehenden Ansprüche, wobei mindestens zwei Datenverarbeitungseinrichtungen (324, 326) eingesetzt werden.

6. Verfahren nach Anspruch 5, wobei durch die auf den mindestens zwei Datenverarbeitungseinrichtungen (324, 326) implementierten Sicherheitsfunktionen eine ASIL-Dekomposition realisiert wird.

7. Verfahren nach einem der voranstehenden Ansprüche, wobei eine Plausibilitätsprüfung zumindest eines Teils der Signale erfolgt.

8. Anordnung mit mindestens einem Mikrocontroller, einem Chip und/oder einem Prozessor, wobei die Anordnung derart eingerichtet ist, dass ein Verfahren zur Überwachung mindestens einer Batterie gemäß einem der Ansprüche 1 bis 7 ausführbar ist

9. Batterie mit Anordnung zur Überwachung der Batterie, wobei die Anordnung derart eingerichtet ist, dass ein Verfahren zur Überwachung der Batterie gemäß einem der Ansprüche 1 bis 7 ausführbar ist.

10. Kraftfahrzeug mit einem elektrischen Antriebsmotor zum Antreiben des Kraftfahrzeugs und einer mit dem elektrischen Antriebsmotor verbundenen oder verbindbaren Batterie gemäß Anspruch 9.

## Claims

1. Method for monitoring at least one battery, wherein measured variables (312) from at least one of the at least one battery are evaluated by at least one data processing device (324, 326), wherein at least one monitoring operation is performed for signals interchanged via a communication link (316, 318, 320) between the at least one battery and the at least one data processing device (324, 326), **characterized in that**
redundant monitoring of at least some of the measured variables is effected and the redundant monitoring implements at least safety requirements in accordance with ASIL-A and ASIL-B.

2. Method according to Claim 1, wherein at least some of the measured variables (312) are evaluated by means of diversified methods.

3. Method according to Claim 2, wherein the diversified methods are implemented on a data processing device.

4. Method according to either of Claims 2 and 3, wherein the at least two diversified methods monitor one another.

5. Method according to one of the preceding claims, wherein at least two data processing devices (324, 326) are used.

6. Method according to Claim 5, wherein the safety functions implemented on the at least two data processing devices (324, 326) produce an ASIL decomposition.

7. Method according to one of the preceding claims, wherein a plausibility check is performed on at least some of the signals.

8. Arrangement having at least one microcontroller, a chip and/or a processor, wherein the arrangement is set up such that a method for monitoring at least one battery according to one of Claims 1 to 7 can be carried out.

9. Battery having an arrangement for monitoring the battery, wherein the arrangement is set up such that a method for monitoring the battery according to one of Claims 1 to 7 can be carried out.

10. Motor vehicle having an electric drive motor for driving the motor vehicle and a battery according to Claim 9 that is or can be connected to the electric drive motor.

## Revendications

1. Procédé de surveillance d'au moins une batterie, des grandeurs mesurées (312) d'au moins l'une parmi l'au moins une batterie étant interprétées par au moins un dispositif de traitement de données (324, 326), au moins une surveillance de signaux échangés par le biais d'une la liaison de communication (316, 318, 320) entre l'au moins une batterie et l'au moins un dispositif de traitement de données (324, 326) étant effectuée, **caractérisé en ce que**
une surveillance redondante d'au moins une partie des grandeurs mesurées est effectuée et au moins des exigences de sécurité selon ASIL-A et ASIL-B sont réalisées par la surveillance redondante.

2. Procédé selon la revendication 1, au moins une partie des grandeurs mesurées (312) étant interprétée par des procédés en diversité.

3. Procédé selon la revendication 2, les procédés en diversité étant mis en oeuvre sur un dispositif de traitement de données.

4. Procédé selon l'une des revendications 2 ou 3, les au moins deux procédés en diversité se surveillant mutuellement.

5. Procédé selon l'une des revendications précédentes, au moins deux dispositifs de traitement de données (324, 326) étant utilisés.

6. Procédé selon la revendication 5, une décomposition ASIL étant réalisée par les fonctions de sécurité mises en oeuvre sur les au moins deux dispositifs de traitement de données (324, 326).

7. Procédé selon l'une des revendications précédentes, un contrôle de plausibilité d'au moins une partie des signaux étant effectué.

8. Arrangement comprenant au moins un microcontrôleur, une puce et/ou un processeur, l'arrangement étant conçu de telle sorte qu'il est possible de mettre en oeuvre un procédé de surveillance d'au moins une batterie selon l'une des revendications 1 à 7.

9. Batterie comprenant un arrangement de surveillance de la batterie, l'arrangement étant conçu de telle sorte qu'il est possible de mettre en oeuvre un procédé de surveillance de la batterie selon l'une des revendications 1 à 7.

10. Véhicule automobile comprenant un moteur de propulsion électrique destiné à propulser le véhicule automobile et une batterie selon la revendication 9 reliée ou pouvant être reliée au moteur de propulsion électrique.
